# EUROPÄISCHE PATENTSCHRIFT

(11) **EP 0 895 899 B1**
(45) Veröffentlichungstag und Bekanntmachung des Hinweises auf die Patenterteilung: **12.11.2003**
(21) Anmeldenummer: 98107502.1
(22) Anmeldetag: 24.04.1998
(51) Int. Cl.: B60R 16/02, H04L 12/40

(54) **Datenbusleitung mit Sende- und Empfangskomponeten**
Data bus line with data transmitting/receiving components
Ligne de bus de données avec des composants de transmission/réception de données

(30) Priorität: 05.08.1997 DE 19733760
(43) Veröffentlichungstag der Anmeldung: 10.02.1999
(73) Patentinhaber: Rheinmetall Landsysteme GmbH, 24159 Kiel (DE)
(72) Erfinder: Semcken, Wolfgang, Dipl.-Ing., 24806 Hohn (DE); Timm, Bernhard, 24161 Altenholz (DE)
(74) Vertreter: Hansmann, Dierk, Dipl.-Ing.

(56) Entgegenhaltungen:
- EP-A- 0 419 712
- EP-A- 0 491 179
- EP-A- 0 712 267

## Beschreibung

Die Erfindung betrifft eine Datenbusleitung mit über Knoten angeschlossenen Sende- und Empfangskomponenten insbesondere für Fahrzeugsysteme, wobei an jedem Knoten ein Abschlußwiderstand in die Busleitung schaltbar ist.

Es ist bekannt, in Fahrzeugen und anderen technischen Systemen Informationssignale über Busleitungen zu übertragen. Die einzelnen im System verteilten Komponenten, die Informationen austauschen müssen, liegen an einer gemeinsamen Busleitung. Die von einer Komponente ausgesendeten Informationen werden in der Weise adressiert, daß nur die entsprechende Zielkomponente diese Informationen erkennt und ausliest.

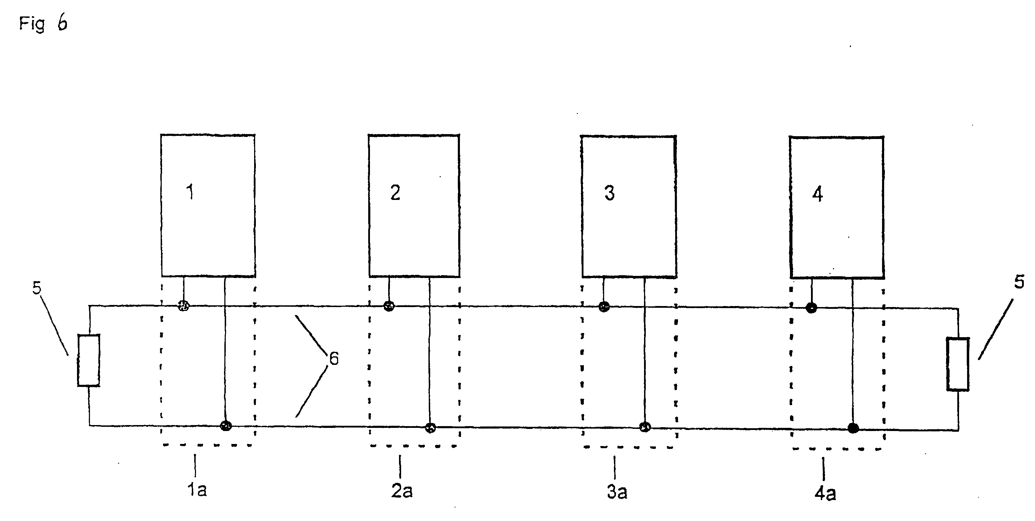

Ein für die Übertragung in Fahrzeugsystemen geeigneter Datenbus mit Sende- und Empfangskomponenten arbeitet nach der Norm des CAN-Busses (Controller Area Network) nach ISO/DIS (Draft International Standard) 11898. Bei dieser Art von Datenübertragung werden binäre elektrische Impulse (Bit), die in einem definierten sequentiellen Muster als Datenprotokoll oder Datentelegramm geordnet übertragen werden, zu vielfältigen Zwecken über Datenaustausch zwischen einer auslösenden und einer ausführenden Sende-/ und Empfangskomponente an der Busleitung des Bussystems benutzt. Diese Standardisierung mit einem Bus nach ISO/DIS 11898 ist beispielhaft in Figur 6 gezeigt und besteht in einem in gewissen Grenzen beliebig langen zweiadrigen Kabel 6 mit zwei Enden, die zur Gewährleistung einer technisch zuverlässigen und störungsfreien Übertragung auch bei hohen Frequenzen jeweils mit einem elektrischen Widerstand 5 abgeschlossen sind. Die Komponenten 1 bis 4 sind über jeweils einen Knoten 1a bis 4a mit der Busleitung 6 verbunden.

Ein Nachteil eines solchen bekannten Busses besteht darin, daß keine Redundanz vorhanden ist, die eine uneingeschränkte Kommunikation über den Bus auch dann noch gewährleistet, wenn die Busleitung an einer Stelle durchtrennt ist oder ein sonstiger Fehlerfall auftritt. Die beiden Komponenten, zwischen denen ein solcher Fehler auftritt, können dann nicht mehr störungsfrei oder überhaupt nicht mehr miteinander kommunizieren. Dies betrifft auch die jeweils weiter rechts oder links liegenden Komponenten. Dies ist insbesondere bei Systemen, bei denen hohe Anforderungen an die Übertragungssicherheit auch im Fehlerfall gestellt werden, nicht akzeptabel.

Nach der EP-A-0419 712 (Oberbegriff von Anspruch 1) ist ein Schnittstellenbaustein bekannt, der hauptsächlich dazu verwendet wird, neue Bussegmente zum Abschluß weiterer Teilnehmer zu eröffnen. Der Schnittstellenbaustein ist dabei auch als Knoten zum Anschluß von Sende- und Empfangseinheiten mit einem direkten Teilnehmeranschluß einsetzbar, wobei auch ein Abschlußwiderstand über die Schalter in die Busleitung schaltbar ist. Es besteht der Mangel, daß hierdurch es nicht möglich ist, Defekte in eine CAN-Bus-Datenleitung zu eliminieren.

Weiterhin ist nach EP-A-0491 179 ein linearer Datenbus vorgesehen, der bei Beibehaltung der Schirmwirkung gegen elektromagnetische Ein- und Abstrahlung die Abschlußwiderstände einfach und kostengünstig an den Datenbus anzuschließen, ermöglicht.

Aus der EP-A-0712 267 ist ferner ein linearer Datenbus bekannt geworden, wobei ohne Eingriff in die Schaltungselektronik eine Anschlußmöglichkeit für Feldbuskabel geschaffen wird.

Der Erfindung liegt deshalb die Aufgabe zugrunde, eine Datenbusleitung mit über Knoten angeschlossenen Sendeund Empfangskomponenten insbesondere für Fahrzeugsysteme zu schaffen, bei der die Übertragungssicherheit auch im Falle eines Durchtrennens des Busses an einer Stelle aufrechterhalten bleibt.

Gelöst wird diese Aufgabe mit einer Datenbusleitung der eingangs genannten Art dadurch, daß beiderseits des Abschlußwiderstandes jeweils ein unabhängig betätigbarer erster bzw. zweiter Schalter liegt, mit dem die Busleitung beiderseits des Abschlußwiderstandes unterbrochen werden kann.

Die Unteransprüche haben vorteilhafte Weiterbildungen der Erfindung zum Inhalt.

Danach ist an jedem Knoten insbesondere ein dritter Schalter vorgesehen, mit dem durch Schließen der Abschlußwiderstand in die Busleitung gelegt wird.

Schließlich verbindet die Busleitung die Knoten vorzugsweise ringförmig miteinander, wobei ein Leitungsstück zwischen zwei benachbarten Knoten durch entsprechende Öffnung des ersten bzw. zweiten Schalters an diesen Knoten offen ist.

Weitere Einzelheiten, Merkmale und Vorteile ergeben sich aus der nachfolgenden Beschreibung einer bevorzugten Ausführungsform anhand der Zeichnung. Es zeigt:
- Fig. 1: ein Prinzipschaltbild eines erfindungsgemäßen Knotens,
- Fig. 2: ein Prinzipschaltbild einer erfindungsgemäßen Datenbusleitung,
- Fig. 3: die Datenbusleitung in gestörtem Zustand,
- Fig. 4: die Datenbusleitung in wiederhergestelltem Zustand,
- Fig. 5: die Datenbusleitung mit einem gestörten Knoten und
- Fig. 6: eine Datenbusleitung gemäß dem Stand der Technik (CAN-Bus).

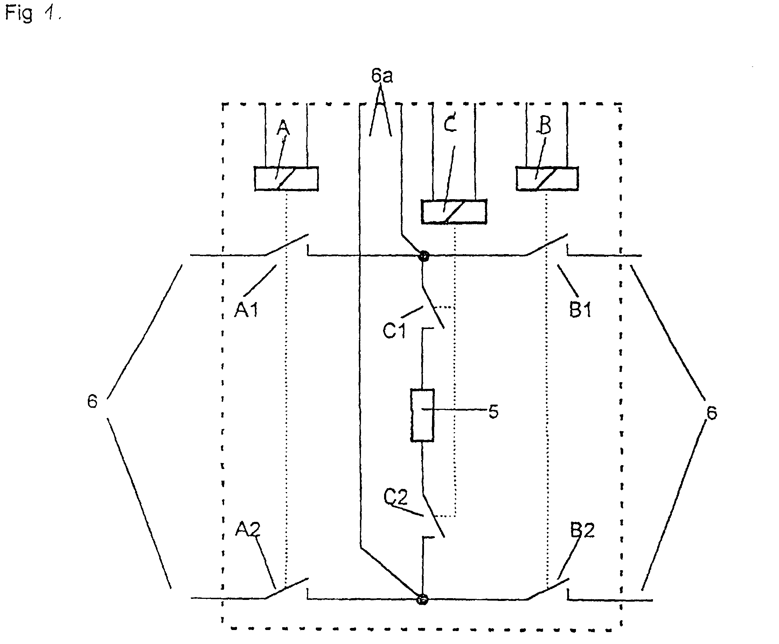

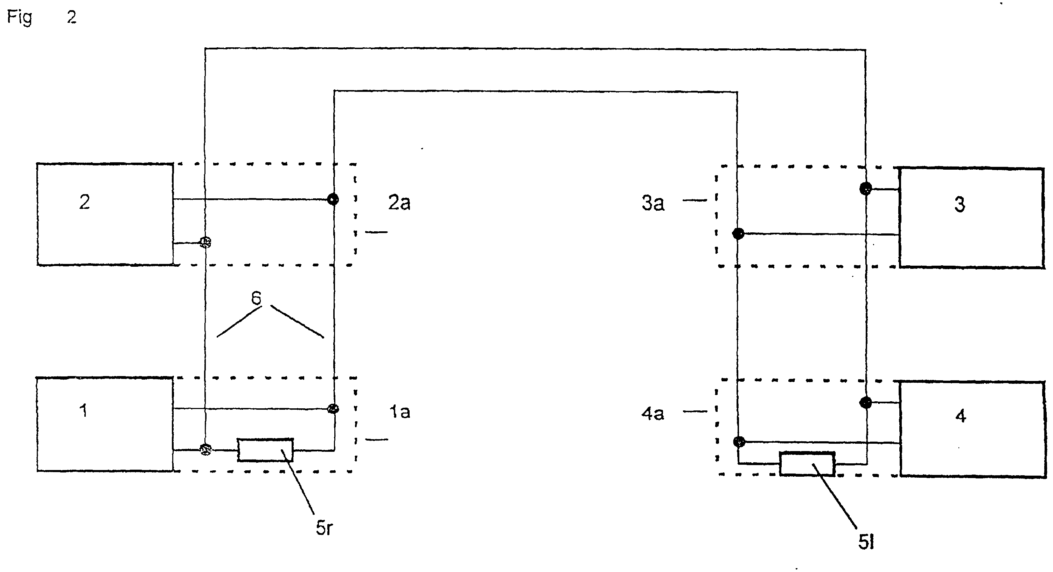

Figur 1 zeigt einen in eine Busleitung 6 geschalteten Knoten. Unter "Knoten" soll in diesem Zusammenhang die Verbindungsschaltung einer Sende- und Empfangskomponente 1, 2, 3, 4 (siehe Figur 2) mit der eigentlichen Busleitung 6 verstanden werden. Jede Komponente 1, 2, 3, 4, die über die Busleitung 6 mit anderen Komponenten Daten austauschen soll, ist somit über einen Knoten 1a, 2a, 3a, 4a mit der Busleitung 6 verbunden.

Der Knoten weist gemäß Figur 1 einen ersten und einen zweiten Schalter A, B auf. Mit den Schaltern, die hier zur Erleichterung des Verständnisses als Relais dargestellt sind, kann die Busleitung durch Öffnen der Kontakte A1, A2 sowie B1, B2 unterbrochen werden. Zwischen den beiden Schaltern befindet sich ein dritter Schalter C mit Schaltkontakten C1, C2, mit denen durch Schließen ein Abschlußwiderstand 5 in die Busleitung gelegt werden kann. Die Sende- und Empfangskomponente ist über Anschlüsse 6a zwischen den Kontakten des ersten und zweiten Schalters A, B in die Busleitung eingeschaltet.

Figur 2 zeigt eine erfindungsgemäße Datenbusleitung 6 mit vier Sende- und Empfangskomponenten 1 bis 4, die über Knoten 1a bis 4a mit der Busleitung verbunden sind. Es handelt sich hierbei um einen CAN-Bus, dessen technische Eigenschaften im wesentlichen unverändert bleiben.

Im dargestellten Fall wird an den Knoten 1a und 4a der Abschlußwiderstand 5r bzw. 51 in die Busleitung 6 gelegt. Am Knoten 1a sind die Kontakte A1, A2 des ersten Schalters A geöffnet und die Kontakte B1 und B2 des zweiten Schalters B sowie die Kontakte C1 und C2 des dritten Schalters C geschlossen. Am Knoten 4a sind hingegen die Kontakte A1 und A2 des ersten Schalters A und die Kontakte C1 und C2 des dritten Schalters C geschlossen, während die Kontakte B1 und B2 des zweiten Schalters B geöffnet sind. An den Knoten 2a und 3a sind die Kontakte A1 und A2 des ersten Schalters A und die Kontakte B1 und B2 des zweiten Schalters B geschlossen, während die Kontakte C1 und C2 des dritten Schalters C geöffnet sind, so daß die Abschlußwiderstände dieser Knoten nicht in der Busleitung liegen.

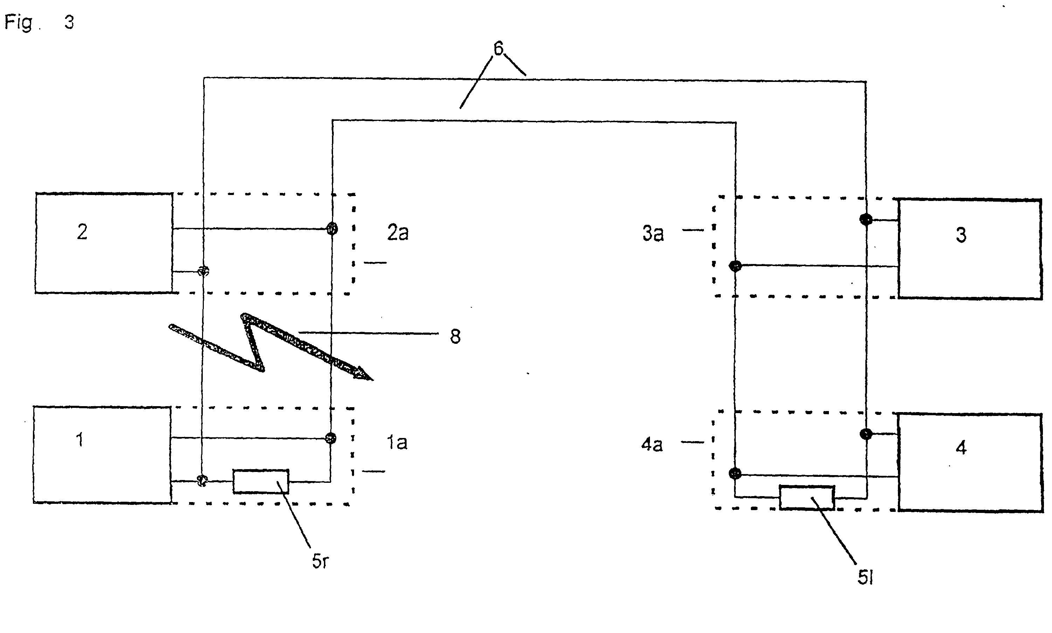

Figur 3 zeigt den Fall, in dem zwischen den Knoten 1a und 2a ein Fehler 8 wie z.B. eine Unterbrechung in der Busleitung 6 auftritt. Der Knoten 1a ist nun von einer Kommunikation mit den übrigen Knoten abgeschnitten.

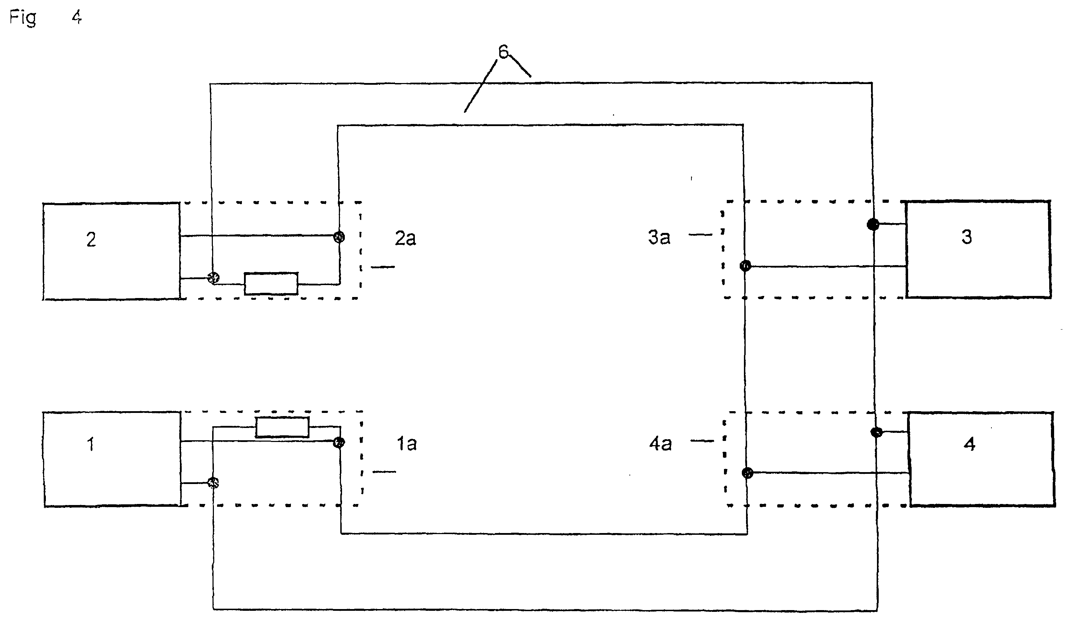

Figur 4 zeigt, wie diese Störung durch entsprechende Auswahl der Abschlußwiderstände 5 umgangen werden kann. Die Schalter am Knoten 1a werden nun in die Stellungen gebracht, wie sie sich am Knoten 4a in Figur 2 befanden, während die Schalter am Knoten 2a die Stellungen im Knoten 1a in Figur 2 einnehmen. Die Knoten 3a und 4a sind wie die Knoten 2a und 3a in Figur 2 geschaltet. Die Datenübertragung erfolgt somit nun über die Verbindung der Knoten 1a und 4a.

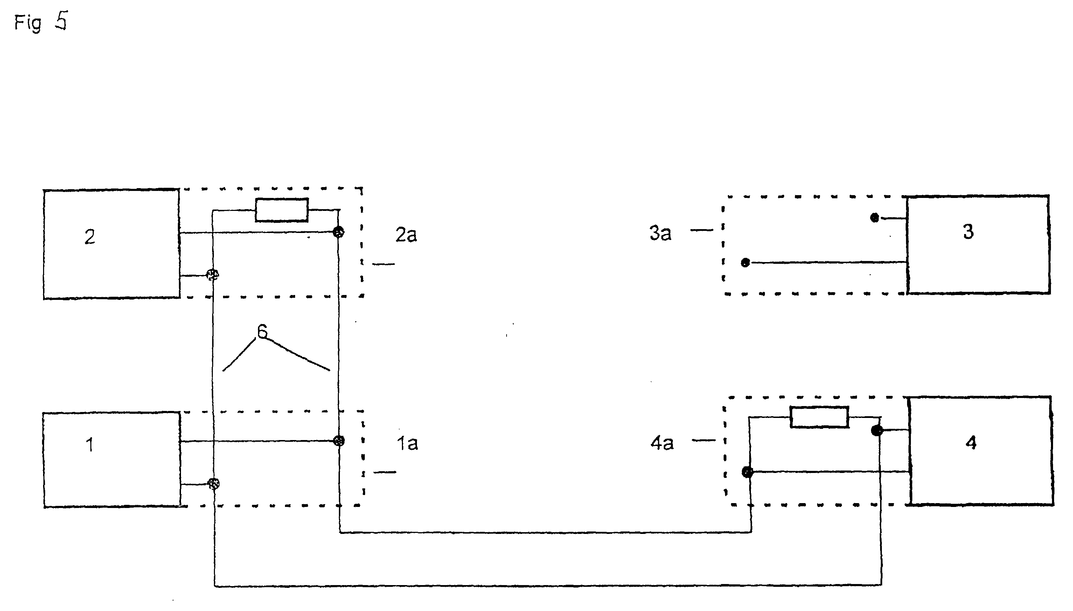

Figur 5 zeigt den Fall, in dem der Knoten 3a vollständig defekt ist und durch entsprechende Umschaltung der übrigen Knoten aus dem Busleitungssystem entfernt wird. Dazu werden im Knoten 3a die Kontakte A1 und A2 des Schalters A und die Kontakte B1 und B2 des Schalters B geöffnet. Ferner nimmt Knoten 2a die Schalterstellungen von Knoten 4a in Figur 2 und Knoten 4a die Schalterstellungen von Knoten 1a in Figur 2 ein. Knoten 1a wird gemäß Figur 5 auf Durchgang geschaltet, indem seine Schalter die Stellungen der Knoten 2a oder 3a in Figur 2 einnehmen. Somit können die intakten Komponenten 1, 2 und 4 über ihre Knoten ungestört miteinander kommunizieren und der defekte Knoten 3a ist von seinen beiden Nachbarknoten 2a und 4a isoliert.

Insgesamt wird also eine virtuelle Ring-Busübertragung realisiert, mit der Leitungsfehler umgangen und defekte Komponenten unwirksam gemacht werden können.

Die beschriebenen Fehlerfälle können sich selbstverständlich zwischen bzw. an allen Knoten ereignen. Sie werden von den Komponenten selbsttätig erkannt, sobald ein an einen Knoten adressiertes Sendesignal nicht von diesem Knoten als empfangen quittiert wird. Erst wenn gleichzeitig zwei Störungen der beschriebenen Art auftreten, ist eine Regeneration nicht mehr möglich.

## Patentansprüche

1. Datenbusleitung (6) mit zwei Basleitungen mit über Knoten (1a,...,4a) angeschlossenen Sende- und Empfangskomponenten (1,...4), insbesondere für Fahrzeugsysteme, wobei in jedem Knoten (1a, 2a, 3a, 4a) ein Abschlußwiderstand (5) in die Datenbusleitung (6) schaltbar ist, **dadurch gekennzeichnet, daß** in jedem knoten (1a,...,4a) in jeder Busleiteung der Datenbusleitung (6) beiderseits des Abschlußwiderstandes und der Anschlüsse (6a) der Sende - und Empfagskomponenten (1,...,4) jeweils ein unabhängig betätigbarer erster bzw. zweiter Schalter (A, B) liegt, mit dem die Busleitungen beiderseits des Abschlußwiderstandes (5) unterbrochen werden kann.

2. Datenbusleitung nach Anspruch 1, **dadurch gekennzeichnet, daß** in jedem Knoten (1a, 2a, 3a, 4a) ein dritter Schalter (C) vorgesehen ist, mit dem durch Schließen der Abschlußwiderstand (5) in die Datenbusleitung (6), zu legen ist.

3. Datenbusleitung nach Anspruch 1 oder 2, **dadurch gekennzeichnet, daß** die Datenbusleitung die Knoten (1a, 2a, 3a, 4a) ringförmig miteinander verbindet, wobei ein Leitungsstück zwischen zwei benachbarten Knoten durch entsprechende Öffnung des ersten bzw. zweiten Schalters (A, B) an diesen Knoten offen ist.

## Claims

1. Data bus line (6) with two bus lines with transmitting and receiving components (1,...,4) connected via nodes (1a,...,4a), in particular for vehicle systems, a terminating resistor (5) being connectable to the data bus line (6) in each node (1a, 2a, 3a, 4a), **characterized in that** in each node (1a, ...,4a) in each bus line of the data bus line (6) an independently actuatable first and second switch (A, B) respectively lies on both sides of the terminating resistor and the connections (6a) of the transmitting and receiving components (1,...,4), with which switch the bus lines on both sides of the terminating resistor (5) can be interrupted.

2. Data bus line according to claim 1, **characterized in that** a third switch (C) is provided in each node (1a, 2a, 3a, 4a), with which switch the terminating resistor (5) is to be connected to the data bus line (6) by closing.

3. Data bus line according to claim 1 or claim 2, **characterized in that** the data bus line connects the nodes (1a, 2a, 3a, 4a) to one another in a ring shape, a section of the line between two adjacent nodes being open due to corresponding opening of the first and second switch (A, B) respectively at these nodes.

## Revendications

1. Ligne de bus de données (6) avec deux lignes de bus équipées de composants de transmission / réception de données (1, 2, 3, 4 ) connectés par l'intermédiaire de noeuds (1a 2a, 3a, 4a), et en particulier pour systèmes de véhicules, une résistance terminale (5) pouvant être connectée à la ligne de bus de données (6), dans chaque noeud (1a, 2a, 3a, 4a), et **caractérisée en ce que** un premier ou deuxième commutateur pouvant être actionné indépendamment et grâce auquel les lignes de bus situées de chaque côté de la résistance terminale (5) peuvent être interrompues repose dans chaque noeud (1a 2a, 3a, 4a) et dans chaque ligne de bus de la ligne de bus de données (6), de part et d'autre de la résistance terminale et des raccordements (6a) des composants d'émission et de réception (1, 2, 3, 4).

2. Ligne de bus de données selon la revendication 1, **caractérisée en ce que** un troisième commutateur (c) permettant d'insérer la résistance terminale (5) dans la ligne de bus de données (6) a été prévu dans chaque noeud (1a, 2a, 3a, 4a)

3. Ligne de bus de données selon la revendication 1 ou 2, **caractérisée en ce que** la ligne de bus de données raccorde les noeuds (1a, 2a, 3a, 4a) les uns aux autres, de façon circulaire, un élément de ligne entre deux noeuds voisins étant ouvert par une ouverture correspondante du premier ou du deuxième commutateur au niveau de ces noeuds.
